# EUROPEAN PATENT APPLICATION

(11) **EP 1 645 614 A1**
(43) Date of publication of application: **12.04.2006**
(21) Application number: 05020158.1
(22) Date of filing: 15.09.2005
(51) Int. Cl.: C10L 10/18, C10L 10/00, C10L 1/238, C10L 1/14, C10L 1/222, C07C 209/48, C10L 1/22, C08F 8/30, C07C 217/54

(54) **Preparation of amine derivates from nitriles and phenols**

(30) Priority: 17.09.2004 US 943316
(71) Applicant: Afton Chemical Corporation, Richmond, VA 23219 (US)
(72) Inventor: Malfer, Dennis J., Glen Allen, Virginia 23059 (US); Thomas, May D., Richmond, Virginia 23234 (US)
(74) Representative: Schwabe - Sandmair - Marx

(57) **Abstract**

This application relates to fuel additive compositions and fuel compositions comprising an amine prepared from nitriles and phenolic compounds. Suitable nitriles include optionally substituted acrylonitrile, and suitable phenolic compounds include polyisobutylphenols and polyisobutyl cresols. The application also relates to methods for reducing intake valve deposits in engines.

## Description

### DESCRIPTION OF THE INVENTION

### Field of the Invention

This application relates to the preparation of amines from nitriles and phenolic compounds. The application also relates to fuel compositions comprising the amines.

### Background of the Invention

Automobile engines tend to develop deposits on the surface of engine components, for example on carburetor ports, throttle bodies, fuel injectors, intake valves and intake ports, due to the oxidation and polymerization of hydrocarbon fuel. In addition, fuels used in internal combustion engines may contain performance-enhancing additives, which also often lead to the formation of undesirable engine deposits. It is believed that these additives negatively affect engine performance by, for example, clogging fuel induction systems. Considerable research has been devoted to additives for controlling (preventing or reducing) deposit formation in internal combustion engines. The preparation and identification of fuel additives capable of controlling undesirable deposit formation has been a focal point of this research.

Compositions comprising amines have previously been used as fuel additives for controlling deposit formation. Such amines often contain alkyl and/or alkylene groups, for example polyisobutene groups.

U.S. Patent No. 4,832,702, discloses fuel and lubricant compositions containing polyisobutylamines having polybutyl- or polyisobutyl radicals derived from isobutene. The compounds are prepared by hydroformulating a polybutene or polyisobutene with a rhodium or cobalt catalyst in the presence of CO and H₂ at from 80° C to 200 °C, and CO/ H₂ pressures of up to 600 bar, and then subjecting the oxo product to a Mannich reaction or amination under hydrogenation conditions.

EP 0 832 960 relates to certain aminocarbamates of polyphenoxyalkanols that may be employed as fuel additives in fuel compositions. The aminocarbamates are prepared by hydroxylalkylation of a polyalkylphenol. The hydroxyalkylated polyalkylphenol is then aminated. The polyalkylphenol may be polyisobutylphenol.

U.S. Patent No. 6,649,800, is directed to a process for preparing polyalkylphenoxyaminoalkanes. The compounds are known fuel additives useful in the prevention and control of engine deposits. The polyalkylphenoxyaminoalkanes are prepared by aminoethylation of a polyakylphenol compound in the presence of a basic catalyst with an optionally substituted 2-oxazolidinone.

### SUMMARY OF THE INVENTION

According to one aspect of the disclosure, there is provided a fuel additive composition comprising an amine prepared by a process comprising (a) reacting a hydroxyaromatic compound of formula (1): 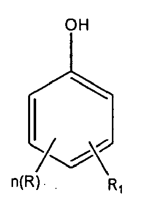 wherein R may be independently chosen from halogen, hydroxyl, alkyl, alkenyl, alkynyl, nitro, and amino radicals, n may be a number ranging from 0 to 4, and R₁ may be chosen from alkyl and alkenyl radicals having from 10 to 1000 carbons bons atoms, with an optionally substituted acrylonitrile of formula (II): 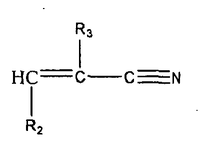 wherein R₂ and R₃ may be each independently chosen from hydrogen, halogen, hydroxyl, nitro, amino, optionally substituted alkyl, optionally substituted alkenyl, and optionally substituted alkynyl radicals, to yield a compound of the formula (111): 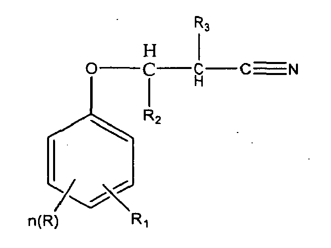 wherein R, n, R₁, R₂, and R₃ are as defined above; and (b) reducing the compound of formula (III) to yield an amine of formula (IV): 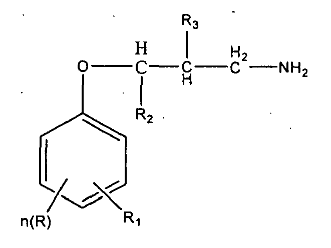 wherein R, n, R₁, R₂, and R₃ are as defined above.

According to another aspect of the disclosure, there is provided a fuel additive composition comprising a polyisobutyl-substituted aromatic amine, wherein said amine is prepared by (a) reacting an optionally substituted acrylonitrile with a polyolefin-substituted hydroxyaromatic compound to yield a 2-cyanoethane oxyaromatic compound; and (b) reducing said 2-cyanoethane oxyaromatic compound with hydrogen in the presence of a catalyst to yield the polyolefin-substituted aromatic amine.

According to another aspect of the disclosure, there is provided a fuel additive composition comprising an amine prepared by a process comprising reacting p-polyisobutylphenol with acrylonitrile to yield p-(polyisobutyl)phenoxy (2-cyano)ethane; and reducing said p-(polyisobutyl)phenoxy (2-cyano)ethane with hydrogen in the presence of a catalyst comprising Raney nickel to yield p-(polyisobutyl)phenoxy (3-amino)propane.

According to another aspect of the disclosure, there is provided a fuel additive composition comprising an amine prepared by a process comprising reacting polyisobutylcresol with acrylonitrile to yield 2-methyl-4-polyisobutylphenoxy (2-cyano)ethane; and reducing said 2-methyl-4-polyisobutylphenoxy (2-cyano)ethane with hydrogen in the presence of a catalyst comprising Raney nickel to yield 2-methyl-4-polyisobutylphenoxy (3-amino)propane.

According to another aspect of the disclosure, there is provided a fuel composition comprising: (A) a fuel in a major amount; and (B) an amine in a minor amount, wherein said amine is prepared by a process comprising reacting p-polyisobutylphenol with acrylonitrile to yield p-(polyisobutyl)phenoxy (2-cyano)ethane; and reducing said p-(polyisobutyl)phenoxy (2-cyano)ethane with hydrogen in the presence of a catalyst comprising Raney nickel to yield p-(polyisobutyl)phenoxy (3-amino)propane.

According to another aspect of the disclosure, there is provided a fuel composition comprising (A) a fuel in a major amount, and (B) an amine in a minor amount, wherein said amine is prepared by a process comprising: reacting polyisobutylcresol with acrylonitrile to yield 2-methyl-4-polyisobutylphenoxy (2-cyano)ethane; and reducing said 2-methyl-4-polyisobutylphenoxy (2-cyano)ethane with hydrogen in the presence of a catalyst comprising Raney nickel to yield 2-methyl-4-polyisobutylphenoxy (3-amino)propane.

Additional objects and advantages of the invention will be set forth in part in the description which follows, and in part will be obvious from the description, or may be learned by practice of the invention. The objects and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

### DESCRIPTION OF THE EMBODIMENTS

A process for preparing a fuel additive comprising a primary amine is disclosed herein. The additive may be useful in a fuel composition for preventing or minimizing deposit formation in internal combustion engines, for example in intake ports and intake valves. According to one aspect, the amines may be prepared by reacting a hydroxyaromatic compound, such as a phenol, with acrylonitrile. The nitrile may be subsequently reduced to a primary amine. According to certain aspects of the present disclosure, the amines disclosed herein may be useful as additives for fuels. Suitable fuels may be chosen from, by way of non-limiting example, diesel, biodiesel, gasoline, and combinations thereof.

In accordance with the present disclosure, the hydroxyaromatic compound may be substituted with at least one substituent other than the hydroxyl moiety. For example, the at least one substituent may be chosen from alkyl and alkenyl moieties, such as C₁-C₄ alkyl and alkenyl moieties. Representative examples of hydroxyaromatic compounds useful in the process disclosed herein include phenolic compounds, including alkyl-substituted phenols. Phenolic compounds that may be used include high molecular weight alkyl-substituted derivatives of resorcinol, hydroquinone, cresol, catechol, xylenol, hydroxydiphenyl, benzylphenol, phenethylphenol, naphthol, and tolylnaphthol, among others, all of which may be optionally further substituted with any other substituent. The other substituent may be chosen from, for example, halogen, hydroxyl, alkyl, alkenyl, alkynyl, nitro, and amino radicals.

Mention may also be made of polypropylphenol (formed by alkylating phenol with polypropylene), polybutylphenols (formed by alkylating phenol with polybutenes and/or polyisobutylene), and polybutyl-co-polypropylphenols (formed by alkylating phenol with a copolymer of butylene and/or butylene and propylene). Other similar long-chain alkylphenols may also be used. Examples include phenols alkylated with copolymers of butylene and/or isobutylene and/or propylene, and one or more mono-olefinic comonomers copolymerizable therewith (e.g., ethylene, 1-pentene, 1-hexene, 1-octene, 1-decene, etc.) where the copolymer molecule contains at least 50% by weight of butylene and/or isobutylene and/or propylene units. Such compounds may be further substituted with at least one additional group, e.g., alkyl groups, for example C₁-C₄ alkyl groups such as methyl. According to one aspect of the present disclosure, a suitable hydroxyaromatic compound is polyisobutylcresol. The comonomers polymerized with propylene or said butylenes may be aliphatic and can also contain non-aliphatic groups, e.g., styrene, o-methylstyrene, p-methylstyrene, divinyl benzene and the like. Thus, in any case the resulting polymers and copolymers used in forming the alkyl-substituted hydroxyaromatic compounds may be substantially aliphatic hydrocarbon polymers.

Polybutylphenol (formed by alkylating phenol with polybutylene) is suitable for the purposes of the present disclosure. The polybutylphenol ring may be further substituted with, for example, alkyl groups, such as lower, e.g., C₁-C₄, alkyl groups, for example methyl, in addition to other groups such as, for example, halogen, hydroxyl, alkyl, alkenyl, alkynyl, nitro, and amino radicals.

According to one aspect of the present disclosure, the polybutylphenol is polyisobutylcresol. Unless otherwise specified herein, the term "polybutylene" is used in a generic sense to include polymers made from "pure" or "substantially pure" 1-butene or isobutene, and polymers made from mixtures of two or all three of 1-butene, 2-butene and isobutene. Commercial grades of such polymers may also contain insignificant amounts of other olefins. So-called high reactivity polybutylenes having relatively high proportions of polymer molecules having a terminal vinylidene group, formed by methods such as described, for example, in U.S. Pat. No. 4,152,499, and W. German Offenlegungsschrift 29 04 314, which may also be suitable for use in forming the long chain alkylated phenol reactant.

The alkylation of the hydroxyaromatic compound may be performed in the presence of an alkylating catalyst at a temperature ranging from about 40 to about 200° C. Acidic catalysts are generally used to promote Friedel-Crafts alkylation. Typical catalysts used in commercial production include, but are not limited to, sulfuric acid, BF₃, aluminum phenoxide, methane-sulfonic acid, cationic exchange resin, acidic clays, and modified zeolites.

The long chain alkyl substituents on the benzene ring of the phenolic compound may be derived from polyolefins having a number average molecular weight of from about 450 to about 3000 (for example, from about 500 to about 2000) as determined by gel permeation chromatography (GPC). The polyolefin may also have a polydispersity (weight average molecular weight/number average molecular weight) in the range of about 1 to about 4, for example from about 1 to about 2, as determined by GPC.

According to certain aspects of the present disclosure, polyalkylphenol reactants, e.g., polypropylphenol and polybutylphenol whose alkyl groups have a number average molecular weight of from 550 to 1200, are suitable for the preparation of the amine compounds disclosed herein. According to certain embodiments, an alkyl group useful in accordance with the present disclosure may be a polybutyl group derived from polybutylene having a number average molecular weight in the range of from 650 to 950.

According to certain aspects of the present disclosure, a suitable configuration of the alkyl-substituted hydroxyaromatic compound may be that of a para-substituted mono-alkylphenol. However, any alkylphenol readily reactive with the optionally substituted acrylonitrile may be employed. Thus, amines made from hydroxyaromatic compounds having only one ring alkyl substituent, or at least two ring alkyl substituents may be suitable for use in accordance with the present disclosure. The long chain alkyl substituents may contain some residual unsaturation, or may be substantially saturated alkyl groups. According to certain embodiments, the long chain alkyl groups may be partially unsaturated. According to one aspect of the disclosure, the long-chain alkyl groups may have a degree of unsaturation ranging from 5 to 80%, for example from 10 to 50%.

The acrylonitrile used for the purposes of the present disclosure may be substituted or unsubstituted. For example, the acrylonitrile may be substituted with at least one of halogen, hydroxyl, nitro, amino, optionally substituted alkyl, optionally substituted alkenyl, and optionally substituted alkynyl radicals. The alkyl, alkenyl, and alkynyl radicals may be substituted with at least one of halogen, hydroxyl, nitro, and amino groups.

### I. REACTION OF OPTIONALLY-SUBSTITUTED ACRYLONITRILE WITH THE HYDROXYAROMATIC COMPOUND

Cyanoethylation of the hydroxyaromatic compound may be conducted by reaction of an optionally substituted acrylonitrile with the hydroxyaromatic compound, for example a polybutylphenol. Without being bound by any specific theory, this reaction is believed to proceed by virtue of the labile hydrogen atom on the phenolic oxygen that, once removed, may produce a nucleophilic group that attacks the most positive position in the acrylonitrile.

The addition of the optionally substituted acrylonitrile to the hydroxyaromatic compound may be conducted in the presence of a catalyst. Effective catalysts include, but are not limited to, strong bases, for example hydroxides, oxides, alkoxides, cyanides, hydrides, and amides of alkali metals. The amount of catalyst employed may vary with the base strength of the catalyst employed, and may be easily determined by one of ordinary skill in the art. For example, according to one method of determining suitable catalyst concentration, the amount of catalyst employed may be such that the aqueous pH of a separate mixture containing the hydroxyaromatic compound, water, and catalyst in the same proportions employed in the given process and approximately 90% by weight of additional water ranges from 8 to 11, for example 9 to 10.7.

The optionally substituted acrylonitrile may be reacted with the hydroxyaromatic compound at a ratio ranging from 0.1:1 to 1:0.1 molar equivalents. According to one aspect of the disclosure, an excess of the acrylonitrile may be used relative to the hydroxyaromatic compound. For example, 2 to 4 moles of acrylonitrile may be used for each equivalent of ―OH.

The cyanoethylation reaction may be vigorous even at moderate temperatures and, in fact, high temperatures may be disfavored because the reaction may reverse at high temperatures. Low temperatures may be suitable for the purposes of the present disclosure. For example, the reaction temperature may range from 0° C to 100° C, for example from 0° C to 50° C. According to one aspect of the disclosure, the temperature may be near or below room temperature.

Mild pressures may be sufficient to effect the reaction. For example, pressures from atmospheric to 150 psi may be suitable. According to one aspect of the disclosure, the cyanoethylation reaction may proceed at atmospheric pressure. The time required to obtain desired conversion levels may vary, but generally ranges from 10 minutes to 2 hours, for example from about 15 minutes to 40 minutes.

A solvent may not be required to carry out the cyanoethylation reaction, but may nevertheless be employed. A solvent may be desirable as a diluent to control the exotherm of reaction or to dissolve solid reactants which would otherwise require higher temperatures for the reactant to be in the liquid phase. Suitable solvents for cyanoethylation include, but are not limited to, inert hydrocarbons such as benzene, ethers such as dioxane, pyridine and acetonitrile. Tertiary butyl alcohol can also be used, although it may itself become cyanoethylated at temperatures above 60° C. The reaction may be performed in a batchwise or continuous manner.

### II. REDUCTION OF THE NITRILE TO THE AMINE

Suitable hydrogenation catalysts for use in reducing the nitrile to an amine include, for example, Raney nickel, copper, and Group VIII metals such as platinum, palladium, rhodium, ruthenium, nickel, and cobalt, or mixtures of any of the foregoing, as well as others now or in the future known to those skilled in the art. The catalyst may be carried on a support such as alumina, silica, titania, magnesium oxide or carbon, or mixtures thereof. For example, one suitable catalyst may be palladium on an alumina support. The amount of metal catalyst on the support may vary from 0.5% to 10%. According to one aspect of the disclosure, the amount ranges from 2% to 5%. The level of catalyst used for effecting hydrogenation of a nitrile may be the same as those commonly used in conventional hydrogenation processes of this type, and may be typically based on the weight of nitrile. Broadly, the metal loading will vary from 0.1% to 10% by weight, for example 1% to 5% by weight, based on the weight of nitrile.

According to one aspect of the disclosure, suitable hydrogenation catalysts may include, but are not limited to, Raney nickel and cobalt slurry catalysts, with or without group VIB metal and manganese and iron promoters. According to one aspect, nickel may be suitable because it is generally not an expensive, strategic metal like cobalt. These catalysts may generally be made by preparing, for example, a 50-50 aluminum-nickel powder. The powder may then be reacted with aqueous sodium hydroxide solution to leach away most of the aluminum, leaving substantially nickel powder with very high surface area. The high surface area may impart catalytic activity, but it may also render the powder pyrophoric. Therefore, the powder may often be shipped under about 50% water for safety. Excess water may be decanted off prior to use, but the powder cannot be dried prior to use because it would ignite. Hence, it may be generally added to the charge while wet.

The water content of the wet powder will vary according to how long the powder has had an opportunity to settle, how well it was drained, and whether it got compacted (i.e., the "tap" density) during handling. An estimate of water content based on the random packing of spheres might indicate about 35% water by volume, while measurement taken from depth occupying a jar of A-5000 Sponge Nickel Catalyst indicates that 32% by volume might be reasonable. The range for low porosity, well-packed spheres of optimal diameter may be as low as about 20% by volume, while the maximum may be less than 50% water by volume for which supernatant may always be present, for example 40% water by volume.

The hydrogenation of the nitrile to the primary amine can be performed neat or with a solvent. According to one aspect of the disclosure, the hydrogenation may be performed in the presence of a solvent. Suitable solvents may include, but are not limited to, those that may be inert and/or may be easily removed if desired, such as organic solvents, for example aromatic solvents such as benzene, xylene, toluene, and mixtures thereof. Other solvents, for example tetrahydrofuran or an alcohol, may also be suitable. According to one aspect of the disclosure, polar solvents, for example isopropanol, may be employed.

Effective conditions for catalytic hydrogenation of the nitrile to the primary amine may be those conventionally used in the art. For example, hydrogenation temperatures can range from about 60° C to 200° C, for example 100° C to 150° C. According to one aspect of the disclosure, the hydrogenation temperature may be 65° C.

Hydrogenation pressure ranges from 50 to 1500 psi, for example from 250 to 1000 psi. The hydrogen pressure should be at least 250 psi, for example 300 psi. According to another aspect of the disclosure, the hydrogenation pressure may be 400 psi. Those of ordinary skill in the art will appreciate that the pressure can go as high as the equipment allows, which for some autoclaves may be as high as 2500 psi. The reaction time can range from 1 to 8 hours. According to one aspect of the disclosure, the reaction time for obtaining meaningful conversion to the amine may be at least 2 hours, for example 3 hours, and about 4 hours may be suitable to obtain a product with acceptable amine values.

### III. FORMULATIONS CONTAINING THE AMINE

When formulating the fuel compositions in accordance with the present disclosure, the amine (with or without other additives) may be employed in an amount sufficient to reduce or inhibit deposit formation in an internal combustion engine. Thus, the fuels may contain a minor amount of the amine that may prevent or reduce formation of engine deposits, including intake system deposits, for example intake valve deposits in spark-ignition internal combustion engines. By way of non-limiting examples, the fuel compositions in accordance with the present disclosure may contain, on an active ingredient basis, an amount of amine in the range of about 5 to about 50 ptb (pounds by weight of additive per thousand barrels by volume of fuel), for example an amount ranging from about 15 to about 40 ptb.

The fuel compositions of the present disclosure may further contain at least one supplemental additive in addition to the amine. The at least one supplemental additive may be chosen from, for example, dispersants, detergents, antioxidants, carrier fluids, metal deactivators, dyes, markers, corrosion inhibitors, biocides, antistatic additives, drag-reducing agents, demulsifiers, dehazers, anti-icing additives, anti-knock additives, anti-valve-seat recession additives, lubricity additives, and combustion improvers. The at least one supplemental additive may be provided in the fuel composition in an amount necessary to achieve the desired effect.

The base fuels used in formulating the fuel compositions according to the present disclosure may include any base fuels suitable for use in the operation of spark-ignition internal combustion engines, such as leaded or unleaded motor and aviation gasolines, and so-called reformulated gasolines which typically contain both hydrocarbons of the gasoline boiling range and fuel-soluble oxygenated blending agents, such as alcohols, ethers and other suitable oxygen-containing organic compounds. Suitable oxygenates may include, for example, methanol, ethanol, isopropanol, t-butanol, mixed C₁ to C₅ alcohols, methyl tertiary butyl ether, tertiary amyl methyl ether, ethyl tertiary butyl ether, and mixed ethers. Oxygenates, when used, may normally be present in the base fuel in an amount below about 25% by volume, for example in an amount that provides an oxygen content in the overall fuel in the range of about 0.5 to about 5 % by volume. The fuels may be chosen from diesel fuels, biodiesel fuels, gasoline, and any combination thereof.

According to one aspect of the present disclosure, the amines may be used in combination with at least one liquid carrier or induction aid. Such carriers can be of various types such as, for example, liquid poly-α-olefin oligomers, mineral oils, liquid poly(oxyalkylene) compounds, liquid alcohols or polyols, polyalkenes, liquid esters, and similar liquid carriers. Mixtures of two or more such carriers can be employed.

Exemplary liquid carriers include 1) a mineral oil or a blend of mineral oils that have a viscosity index of less than about 120, 2) at least one poly-α-olefin oligomer, 3) at least one poly(oxyalkylene) compound having an average molecular weight in the range of about 500 to about 3000, 4) polyalkenes or 5) any combination of mixture thereof. The mineral oil carriers that can be used include paraffinic, naphthenic and asphaltic oils, and may be derived from various petroleum crude oils and processed in any suitable manner. For example, the mineral oils may be solvent extracted or hydrotreated oils. Reclaimed mineral oils can also be used. In accordance with certain aspects of the present disclosure, the mineral oil used may have a viscosity at 40° C of less than about 1600 SUS, for example from 300 to 1500 SUS at 40° C. Paraffinic mineral oils suitably may have viscosities at 40° C in the range of about 475 SUS to about 700 SUS. According to certain aspects of the present disclosure, the mineral oil may have a viscosity index of less than about 100, for example less than about 70, such as in the range of from about 30 to about 60.

In some cases, the amine can be synthesized in the carrier fluid. In other instances, the amine may be blended with a suitable amount of the carrier fluid. If desired, the amine can be formed in a suitable carrier fluid and then blended with an additional quantity of the same or a different carrier fluid.

The additives used in formulating the fuels disclosed herein can be blended into the base fuel individually or in various sub-combinations. However, it may be desirable in some instances to blend all of the components concurrently using an additive concentrate (i.e., additives plus a diluent, such as a hydrocarbon solvent). The use of an additive concentrate takes advantage of the mutual compatibility afforded by the combination of ingredients when in the form of an additive concentrate. Also, use of a concentrate may reduce blending time and may lessen the possibility of blending errors.

### IV. EXAMPLES

A series of intake valve deposit (IVD) tests was conducted, comparing intake valve deposits resulting from running an engine with a fuel containing (1) no added detergent, and (2) a known Mannich detergent. In summary, the tests were conducted with a 1997 Dodge Intrepid on a dynameter using the standard QUAD-4 cycle (average speed = 45.7 mph, cycle length = 76 miles). At the conclusion of the cycle, the amount of deposits on the intake valves was measured in each cylinder, and the average amount was calculated. The fuel with no added detergent resulted in an average IVD of 369.4 mg; a fuel containing a known Mannich detergent resulted in an average IVD of 8.3 mg.

Another series of IVD tests was conducted as generally described above. A fuel containing a known Mannich detergent resulted in an average IVD of 50.1 mg. A fuel containing a detergent comprising the organic molybdenum complex according to the present disclosure resulted in an average IVD of 0 mg. Thus, the organic molybdenum complex according to the present disclosure is unexpectedly superior at least to a detergent containing a known Mannich derivative in terms of, e.g., its effectiveness in reducing intake valve deposits.

Other aspects of the present invention include methods for controlling intake valve deposits and eliminating, or at least reducing, valve sticking in a spark-ignition engine by fueling and/or operating the engine with the fuel composition disclosed herein. According to various embodiments, the fuel compositions disclosed herein may provide superior control of intake valve deposits and valve sticking reduction as compared to known fuel compositions. For the purposes of the present disclosure, "control" of intake valve deposits means reducing or eliminating intake valve deposits relative to operating an engine without the fuel additive/fuel compositions disclosed herein.

Other embodiments of the invention will be apparent to those skilled in the art from consideration of the specification and practice of the invention disclosed herein. It is intended that the specification and examples be considered as exemplary only, with a true scope and spirit of the invention being indicated by the following claims.

## Claims

1. A fuel additive composition comprising an amine prepared by a process comprising:
(a) reacting a hydroxyaromatic compound of formula (1): 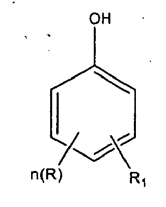 wherein R may be independently chosen from halogen, hydroxyl, alkyl, alkenyl, alkynyl, nitro, and amino radicals, n is a number ranging from 0 to 4, and R₁ may be chosen from alkyl and alkenyl radicals having from 10 to 1000 carbons atoms,
with an optionally substituted acrylonitrile of formula (II): 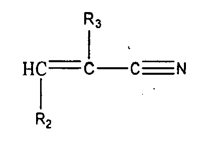 wherein R₂ and R₃ may each independently be chosen from hydrogen, halogen, hydroxyl, nitro, amino, optionally substituted alkyl, optionally substituted alkenyl, and optionally substituted alkynyl radicals,
to yield a compound of the formula (III): 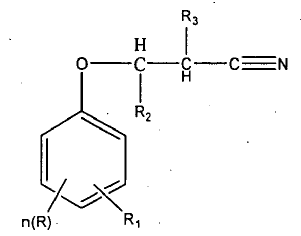 wherein R, n, R₁, R₂, and R₃ are as defined above; and
(b) reducing the compound of formula (III) to yield an amine of formula (IV): 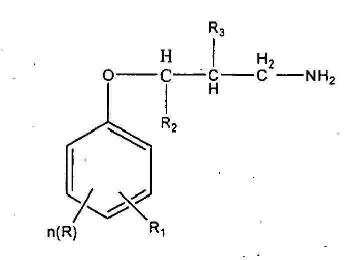 wherein R, n, R₁, R₂, and R₃ are as defined above.

2. The fuel additive composition according to Claim 1, wherein R₁ is chosen from polyalkylene radicals.

3. The fuel additive composition according to Claim 1, wherein n is 0.

4. The fuel additive composition according to Claim 1, wherein R₁ is chosen from polyolefin radicals, and preferably from polyisopropylene radicals and polyisobutylene radicals.

5. The fuel additive composition according to Claim 1, wherein the hydroxyaromatic compound is chosen from phenols, or alkyl phenols, preferably cresols.

6. The fuel additive composition according to Claim 1, wherein said amine is prepared under batch process conditions, or under continuous process conditions.

7. The fuel additive composition according to Claim 1, wherein the reduction of the nitrile to the amine is performed in the presence of a catalyst, wherein the catalyst is preferably chosen from Raney nickel catalysts and Group VIII metal catalysts.

8. A fuel additive composition of Claim 1 comprising a polyolefin-substituted aromatic amine, wherein said amine is prepared by:
(a) reacting an optionally substituted acrylonitrile with a polyolefin-substituted hydroxyaromatic compound to yield a 2-cyanoethane oxyaromatic compound; and
(b) reducing said 2-cyanoethane oxyaromatic compound with hydrogen in the presence of a catalyst to yield the polyolefin-substituted aromatic amine.

9. The fuel additive composition according to Claim 8, wherein the polyolefin-substituted hydroxyaromatic compound is a polyisobutylene-substituted phenol and the polyolefin-substituted aromatic amine is a polyisobutylene-substituted aromatic amine.

10. The fuel additive composition according to Claim 8, wherein the optionally substituted acrylonitrile is unsubstituted.

11. The fuel additive composition according to Claim 8, wherein the catalyst comprises Raney nickel.

12. A fuel additive composition of Claim 8 comprising an amine prepared by a process comprising:
reacting p-polyisobutylphenol with acrylonitrile to yield p-(polyisobutyl)phenoxy (2-cyano)ethane; and
reducing said p-(polyisobutyl)phenoxy (2-cyano)ethane with hydrogen in the presence of a catalyst comprising Raney nickel to yield p-(polyisobutyl)phenoxy (3-amino)propane.

13. A fuel additive composition of Claim 8 comprising an amine prepared by a process comprising:
reacting polyisobutylcresol with acrylonitrile to yield 2-methyl-4-polyisobutylphenoxy (2-cyano)ethane; and
reducing said 2-methyl-4-polyisobutylphenoxy (2-cyano)ethane with hydrogen in the presence of a catalyst comprising Raney nickel to yield 2-methyl-4-polyisobutylphenoxy (3-amino)propane.

14. A fuel composition comprising:
(A) a fuel in a major amount; and
(B) an amine in a minor amount, wherein said amine is prepared by a process comprising:
(a) reacting a hydroxyaromatic compound of formula (I): 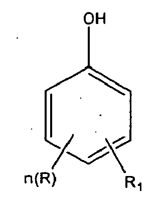 wherein R may be independently chosen from halogen, hydroxyl, alkyl, alkenyl, alkynyl, nitro, and amino radicals, n is a number ranging from 0 to 4, and R₁ may be chosen from alkyl and alkenyl radicals having from 10 to 1000 carbons atoms,
with an optionally substituted acrylonitrile of formula (II): 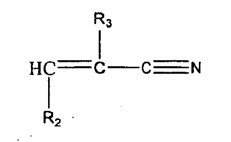 wherein R₂ and R₃ may each independently be chosen from hydrogen, halogen, hydroxyl, nitro, amino, optionally substituted alkyl, optionally substituted alkenyl, and optionally substituted alkynyl radicals,
to yield a compound of the formula (III): 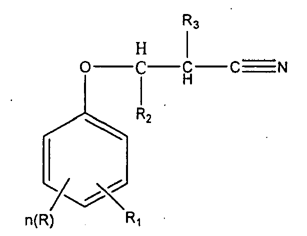 wherein R, n, R₁, R₂, and R₃ are as defined above; and
(b) reducing the compound of formula (III) to yield an amine of formula (IV): 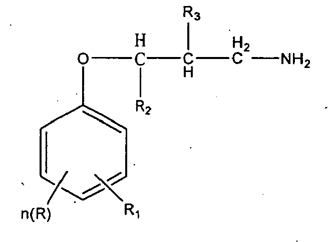
wherein R, n, R₁, R₂, and R₃ are as defined above.

15. A fuel composition of claim 14 comprising:
(A) a fuel in a major amount; and
(B) an amine in a minor amount, wherein said amine is prepared by a process comprising:
reacting p-polyisobutylphenol with acrylonitrile to yield p-(polyisobutyl)phenoxy (2-cyano)ethane; and
reducing said p-(polyisobutyl)phenoxy (2-cyano)ethane with hydrogen in the presence of a catalyst comprising Raney nickel to yield p-(polyisobutyl) phenoxy (3-amino)propane.

16. A fuel composition comprising:
(A) a fuel in a major amount, and
(B) an amine in a minor amount, wherein said amine is prepared by a process comprising:
reacting polyisobutylcresol with acrylonitrile to yield 2-methyl-4-poly isobutyl phenoxy (3-cyano)propane; and
reducing said 2-methyl-4-polyisobutylphenoxy (3-cyano)propane with hydrogen in the presence of a catalyst comprising Raney nickel to yield 2-methyl-4-polyisobutylphenoxy (3-amino)propane.

17. The fuel composition according to Claim 14, 15 or 16, wherein said fuel is or comprises one of at least one of a diesel fuel, biodiesel fuel and gasoline.

18. The fuel composition according to Claim 14, 15 or 16, further comprising at least one additive chosen from dispersants, detergents, antioxidants, carrier fluids, metal deactivators, dyes, markers, corrosion inhibitors, biocides, antistatic additives, drag-reducing agents, demulsifiers, dehazers, anti-icing additives, anti-knock additives, anti-valve-seat recession additives, lubricity additives, and combustion improvers.

19. The fuel composition according to Claim 14, 15 or 16, further comprising a Mannich product.

20. A process for controlling intake valve deposits in an engine, comprising fueling and/or operating said engine with a fuel comprising a fuel additive composition according to one of Claims 8, and 12 to 16.

21. The process according to Claim 19, wherein said fuel composition comprises gasoline.

22. The fuel additive of one of claims 4, 8, 9, or 12 to 16, wherein the polyolefine has a number average of w of 450 to 3000, as determined by GPC.
